(19) Europäisches Patentamt
European Patent Office
Office européen des brevets

(11) **EP 2 814 155 A1**

(12) **EUROPEAN PATENT APPLICATION**

(43) Date of publication:
**17.12.2014 Bulletin 2014/51**

(51) Int Cl.:
*H02M 1/34* (2007.01)　　*H02M 3/335* (2006.01)

(21) Application number: **13171354.7**

(22) Date of filing: **11.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Research Ltd.**
**8050 Zürich (CH)**

(72) Inventors:
• **Park, Ki-Bum**
**5405 Baden-Dättwil (CH)**

• **Canales, Francisco**
**5405 Baden-Dättwil (CH)**
• **Pettersson, Sami**
**5405 Baden-Dättwil (CH)**

(74) Representative: **Kolster Oy Ab**
**Iso Roobertinkatu 23**
**PO Box 148**
**00121 Helsinki (FI)**

(54) **LC snubber circuit**

(57)　The present disclosure discloses an LC snubber circuit for a switching converter, wherein the switching converter comprises an inductor and a switching device connected in series. The LC snubber circuit comprises a first snubber diode, a snubber capacitor, a second snubber diode, and a snubber transformer having a primary winding and a secondary winding. The secondary winding of the snubber transformer is connected to an output of the switching converter.

Figure 4a

Figure 4b

Figure 4c

Figure 4d

Figure 4e

**Description**

FIELD OF THE INVENTION

The present invention relates to LC snubber circuits, and particularly to minimising circulating currents in an LC snubber circuit.

BACKGROUND INFORMATION

A variety of voltage snubber circuits have been developed for guaranteeing a voltage stress margin of semiconductors in switching converters. An RCD snubber is widely used in cost-sensitive applications, but it may cause rather large power losses [1]-[2].

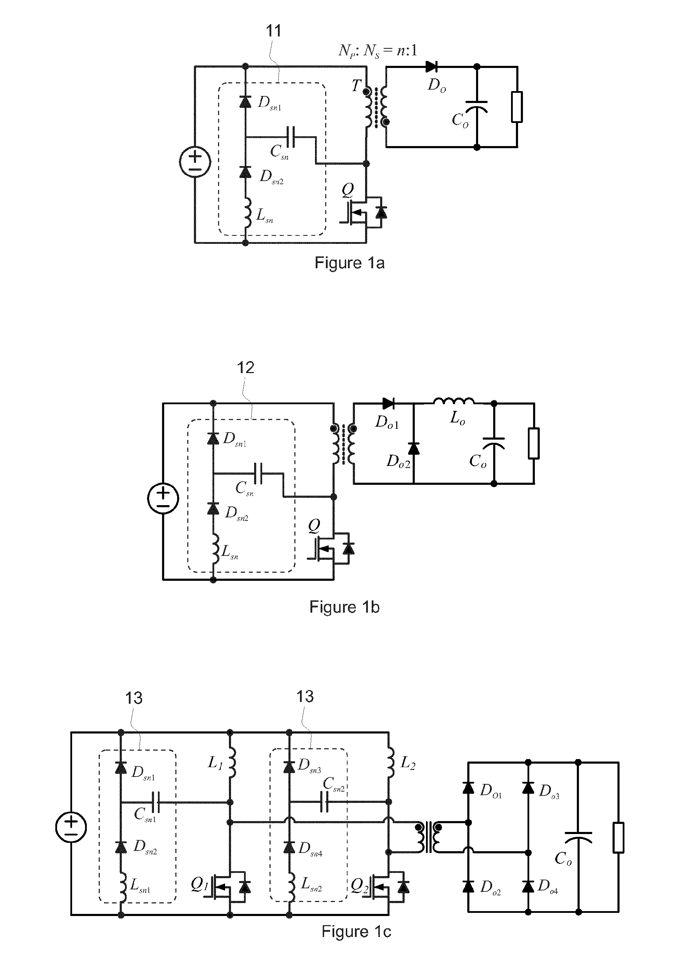

An LC snubber may provide an alternative solution for reducing power losses in efficiency-sensitive applications [3]-[9]. Figures 1a to 1c show some implementations of conventional LC snubbers. Figure 1a shows an LC snubber 11 in a flyback converter. Figure 1b shows an LC snubber 12 in a forward converter. Figure 1c shows an LC snubber 13 in a current-fed converter.

The flyback converter topology, such as that shown in Figure 1a, is a popular topology for low power applications due to its simple structure comprising one switch $Q$, one diode $D_o$, and a transformer $T$ [1]. At the cost of the simple structure, however, the flyback may suffer from a large voltage/current stress on the switch $Q$ and the diode $D_o$. Moreover, a leakage inductance of the main transformer $T$ can cause a considerable voltage spike at turn-off of the switch $Q$. As a result, use of a voltage snubber may be required, as shown in Figure 1a, for example.

The voltage stress margin of the switching device in the switching converter may be very limited in some high supply voltage applications, such as a three-phase auxiliary power supply (APS), where the supply voltage may reach 1200 V. Thus, the snubber may have to be able to limit additional voltage stress to a small range [2]. In this case, the snubber capacitance in the LC snubber can be increased, which may, in return, result in higher circulating currents. These circulating currents may induce additional conduction losses in the switch and in the snubber circuit itself. Some of the developed LC snubbers may improve the performance [7]-[9], but they are only limited to a narrow supply voltage range.

BRIEF DISCLOSURE

An object of the present invention is to provide a method and an apparatus for implementing the method so as to alleviate the above disadvantages. The objects of the invention are achieved by a method and an arrangement which are characterised by what is stated in the independent claims. The preferred embodiments of the invention are disclosed in the dependent claims.

The present disclosure presents an enhanced LC snubber topology for a switching converter. The enhanced LC snubber can reduce circulating current compared with a conventional LC snubber. The proposed snubber has a coupling to the output of the switching converter through which energy stored in the snubber can be transferred to the output, which minimises the circulating currents. This may lead to higher efficiency. The coupling to the output may be implemented by a transformer having its primary winding operating as the snubber inductance.

The disclosed LC snubber can provide an effective voltage clamping for the switch(es) of the switching converter. The peak voltage stress for the switch(es) can be reduced. This leads to lower switch voltage stress and higher reliability. The effective voltage clamping may also provide room for increased duty ratio, thereby further reducing conduction losses.

The current ripple of the output capacitor can be reduced as a portion of the power is transferred through the snubber during the on-state of the switch. As the ripple is reduced, the size of the output filter of the switching converter can also be reduced.

The disclosed enhanced LC snubber can be applied to various types of converter topologies and implemented with different types of secondary stages of the enhanced LC snubber.

BRIEF DESCRIPTION OF THE DRAWINGS

In the following, the invention will be described in greater detail by means of preferred embodiments with reference to the attached drawings, in which

Figures 1a to 1c show some implementations of conventional LC snubbers;
Figures 2a to 2c show exemplary voltage and current waveforms of a conventional LC snubber;
Figures 3a to 3e show current paths of a conventional LC snubber;
Figures 4a to 4e illustrate an exemplary implementation of the disclosed enhanced LC snubber topology;

Figure 5 shows exemplary implementation of the enhanced LC snubber circuit in a flyback converter;
Figures 6a to 6d show exemplary voltage and current waveforms of the enhanced LC snubber of Figure 5;
Figures 7a to 7d show current paths in the enhanced LC snubber of Figure 5;
Figures 8a to 8d show exemplary, simulated current and voltage waveforms of a conventional LC snubber; and
Figures 9a to 9d show exemplary, simulated current and voltage waveforms of the enhanced LC snubber.

DETAILED DISCLOSURE

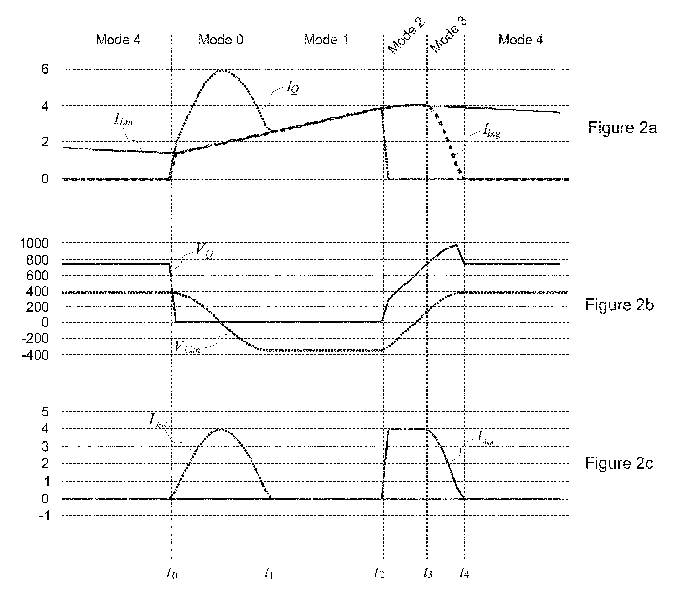

An operation principle of a conventional LC snubber installed in a flyback converter, such as that illustrated in Figure 1a, is next discussed in more detail. The circulating current inducing additional conduction losses is also investigated. Figures 2a to 2c show exemplary voltage and current waveforms of the snubber shown in Figure 1a. A magnetising current $I_{Lm}$ and a leakage current $I_{lkg}$ of the transformer $T$, and a current $I_Q$ through the switching device $Q$ are shown in Figure 2a; a voltage $V_Q$ over the switching device $Q$ and a voltage $V_{Csn}$ over a snubber capacitor $C_{sn}$ are shown in Figure 2b; currents $I_{Dsn2}$ and $I_{Dsn2}$ through snubber diodes $D_{sn1}$ and $D_{sn2}$ are shown in Figure 2c.

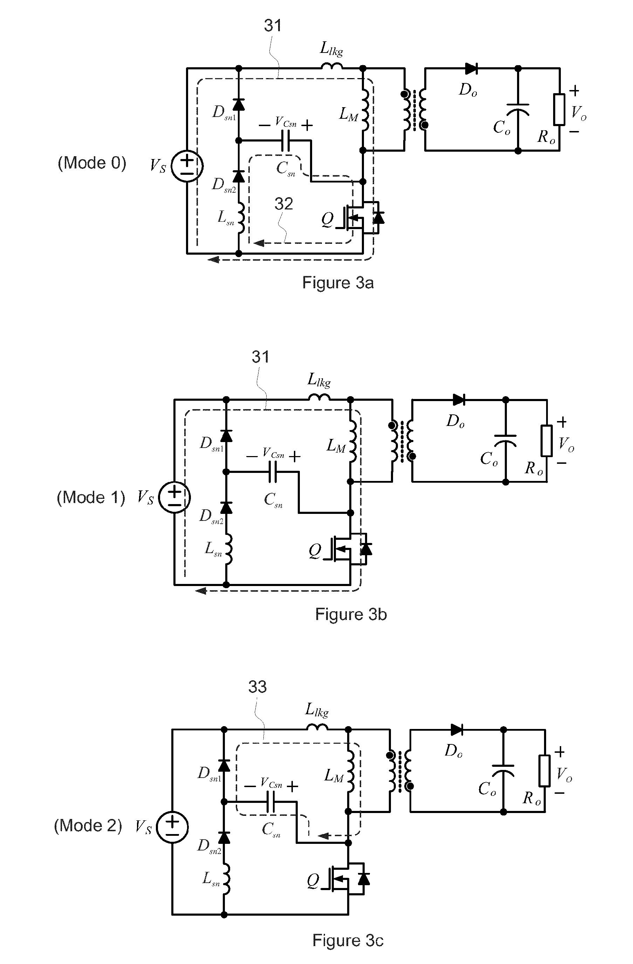

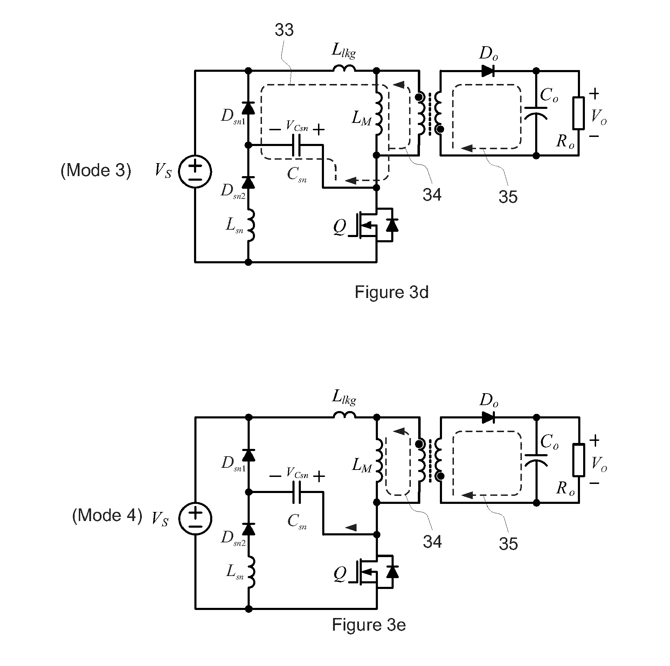

Figures 3a to 3e show current paths of the LC snubber of Figure 1a. For the sake of circuit analysis, the main transformer has been replaced with an equivalent circuit comprising an ideal transformer, a magnetising inductance $L_m$ and a leakage inductance $L_{lkg}$ in Figures 3a to 3e.

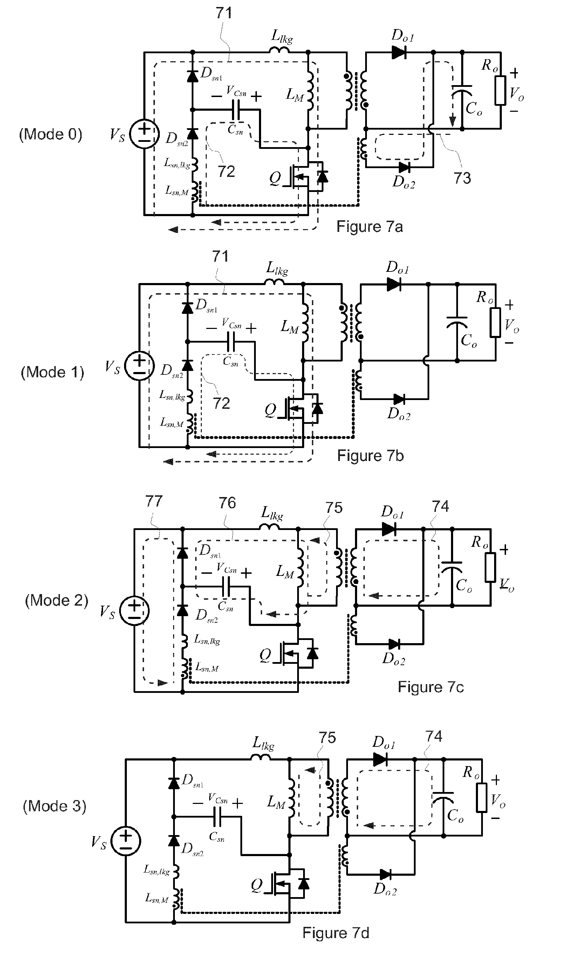

The operation of the snubber in Figure 1a can be divided into five modes. At instant $t_0$ in Figures 2a to 2c, the switch $Q$ is turned on and the supply voltage $V_S$ is applied to the transformer primary side, and thus, the snubber enters Mode 0. The magnetising current $I_{Lm}$ of the transformer starts to flow through $Q$ on path 31 as shown in Figure 7a. At the same time, the snubber capacitor $C_{sn}$ and the snubber inductor $L_{sn}$ form a first resonant circuit and a sinusoidal current induced by the resonant operation starts to flow through $Q$ on path 32 as shown in Figure 7a. The sinusoidal current passing through the snubber inductor $L_{sn}$ can be calculated as follows:

$$I_{Lsn}(t) = V_{Csn,\text{peak}} \sqrt{\frac{C_{sn}}{L_{sn}}} \sin\left(\omega_1 (t - t_0)\right), \qquad (1)$$

where $\omega_1$ is the resonant frequency of the first resonant circuit and $V_{Csn,\text{peak}}$ is the (positive) peak voltage over the snubber capacitor $C_{sn}$. The (positive) peak voltage can be calculated as follows:

$$V_{Csn,\text{peak}} = \Delta V_Q + nV_O, \qquad (2)$$

where $\Delta V_Q$ is the the additional voltage stress over the switch $Q$, and $V_O$ is the output voltage of the switching converter; $n$ is the transformation ratio of the transformer $T$. The resonant frequency $\omega_1$ can be calculated as follows:

$$\omega_1 = \frac{1}{\sqrt{L_{sn} C_{sn}}}.$$

Figure 2c shows the sinusoidal shape of the second snubber diode current between instants $t_0$ and $t_1$.

At instant $t_1$ in Figure 2c, the second snubber current $I_{Dsn2}$ reaches zero, and the snubber circuit enters Mode 1. As also shown in Figure 2a, only the magnetising current $I_{Lm}$ flows through the switch $Q$.

At instant $t_2$, the switch $Q$ is turned off and the snubber enters Mode 2. As the switch is no longe conducting, the first snubber diode $D_{sn1}$ starts to conduct conducting and magnetising current $I_{Lm}$ charges the snubber capacitor $C_{sn}$. Figure 3c shows a new path 33 of the magnetising current $I_{Lm}$. As shown in Figure 2b, the snubber capacitor voltage $V_{Csn}$ increases and the switch voltage $V_Q$ increases accordingly.

At instant $t_3$, the snubber enters Mode 3. The switch voltage $V_Q$ reaches $V_S + nv_O$, i.e. the steady-state voltage stress on $Q$, and the magnetising current starts to flow through a primary winding of the ideal transformer (on path 34 on Figure 3d). The output diode $D_O$ of the converter starts to conduct and charge the output capacitor $C_O$ (through path 35 in Figure 3d). At the same time, the energy stored in the leakage inductance $L_{lkg}$ charges the snubber capacitor $C_{sn}$ through path 33, and thus the switch voltage $V_Q$ starts to rise above the steady-state voltage stress $V_S + nV_O$. The leakage current $I_{lkg}$ decreases as the switching device voltage $V_Q$ increases first. The leakage current

$I_{lkg}$ can be defined as follows:

$$I_{lkg}(t) = I_{Q,\text{peak}}\left\{1 - \cos\left(\omega_2\left(t - t_3\right)\right)\right\}, \qquad (3)$$

where $\omega_2$ is the resonance frequency of the second resonance circuit and can be defined as follows:

$$\omega_2 = \frac{1}{\sqrt{L_{lkg}C_{sn}}}.$$

The switching device voltage $V_Q$ can be calculated as follows:

$$V_Q(t) = V_S + nV_O + I_{Q,\text{peak}}\sqrt{\frac{L_{lkg}}{C_{sn}}}\sin\left(\omega_2\left(t - t_3\right)\right), \qquad (4)$$

where $I_{Q,peak}$ is the peak current through the switching device Q, i.e. the current $I_Q(t_3)$ through the switching device Q at instant $t_3$.

At instant $t_4$ in Figure 2a, $I_{lkg}$ reaches zero. In Figure 2b, $V_Q$ reaches the maximum voltage and decreases then to the steady-state voltage stress level again. The snubber enters Mode 4, in which the switch remains in a non-conducting state. The magnetizing current still charges the output capacitor $C_O$ through paths 34 and 35.

Then the switching device Q is turned on again and the whole cycle is repeated starting from Mode 0.

An additional voltage stress $\Delta V_Q$ can be seen on top of the steady-state voltage stress $V_S + nV_O$ in Figure 2b (between instants $t_3$ and $t_4$). The level of the additional voltage stress $\Delta V_Q$ depends on how the snubber is implemented. On the basis of Equation 4, the additional voltage stress can be defined as follows:

$$\Delta V_Q = I_{Q,\text{peak}}\sqrt{\frac{L_{lkg}}{C_{sn}}}. \qquad (5)$$

In order to guarantee that the maximum voltage stress of the switch remains within a desired margin, a maximum level for the additional voltage stress $\Delta V_Q$ may be determined first. Then the snubber capacitor $C_{sn}$ capacitance can be determined for given values of $I_{Q,peak}$ and $L_{lkg}$ on the basis of Equation 5:

$$C_{sn} = \frac{L_{lkg}I_{Q,\text{peak}}^2}{\Delta V_Q^2}. \qquad (6)$$

The circulating current(s) induced in the snubber of Figure 1a is (are) proportional to $C_{sn}$ and can be expressed as follows:

$$\begin{aligned} I_{Dsn1,\text{avg}} = I_{Dsn2,\text{avg}} = I_{Lsn,\text{avg}} &= 2V_{Csn,\text{peak}}C_{sn}F_s \\ &= 2\left(I_{Q,\text{peak}}\sqrt{L_{lkg}C_{sn}} + nV_OC_{sn}\right)F_s \end{aligned}, \qquad (7)$$

where $F_s$ is the switching frequency of the switching converter.

As shown in Equations 6 and 7, the circulating current increases as the additional voltage stress $\Delta V_Q$ reduces. This circulating current may vary depending on the application and the design. For example, if the switch voltage stress margin is small, as in APS applications, a large snubber capacitor $C_{sn}$ may be used. As a result, a larger circulating current is induced in the snubber, which may result in higher conduction losses. For example, Figures 2a to 2c represent waveforms of a switching converter designed according to an APS specification. As shown in Figures 2a and 2c, the total circulating current $I_{Dsn1} + I_{Dsn2}$ forms a large portion of the current $I_{lkg}$ that transfers energy.

The present disclosure discloses an LC snubber circuit for a switching converter which can reduce the circulating currents. In order to reduce the circulating currents within the snubber circuitry, the disclosed enhanced LC snubber transfers the energy stored in the snubber to the output side of the switching converter. The disclosed enhanced LC snubber topology is applicable to a variety of switching converters. For example, it may be used in a switching converter which comprises a series connection of an inductance and a switching device used for producing an output voltage.

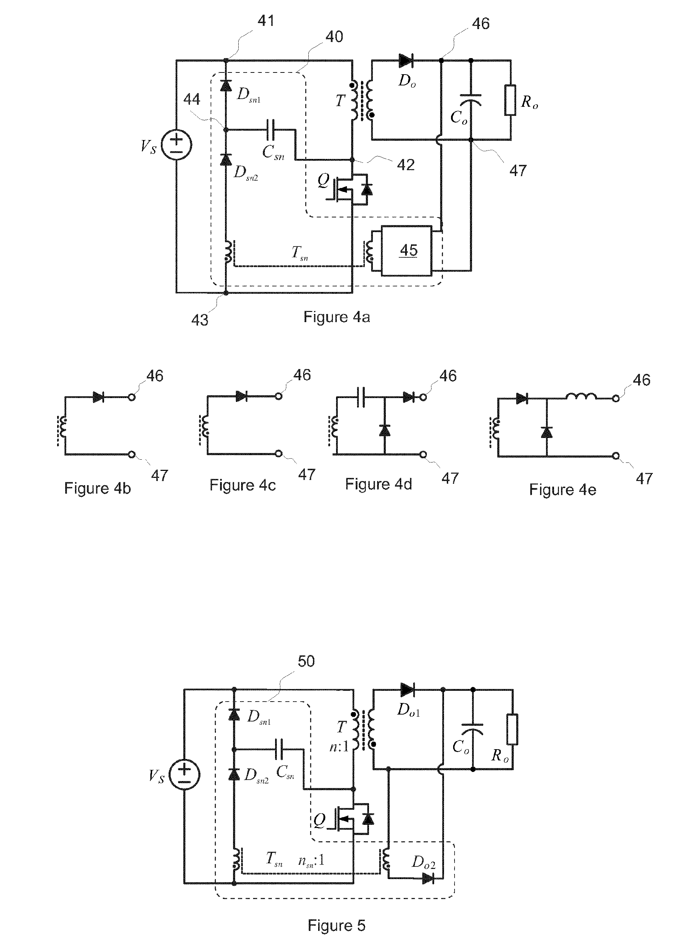

Figures 4a to 4e illustrate an exemplary implementation of the disclosed enhanced LC snubber topology. Figure 4a illustrates an exemplary switching converter comprising the disclosed enhanced LC snubber topology. The LC snubber 40 of Figure 4a can be used for limiting the maximum voltage stress of a main switching device of the switching converter.

In Figure 4a, the switching converter is an isolated switching converter in the form of a flyback converter. A series connection is formed by a first converter inductor connected between a first connection node 41 and a second connection node 42, and a first converter switching device $Q$ connected between the second connection node 42 and a third connection node 43. The series connection is supplied with a supply voltage $V_s$.

In Figure 4a, the first converter inductor is in the form of a primary winding of a main transformer $T$. The series connection of the main transformer $T$ primary winding and the switching device $Q$ is connected between outputs of a voltage supply $V_s$. The secondary winding of the main transformer $T$ is connected to an output capacitor through an output diode $D_O$. The switching device $Q$ in Figure 4a is an N-channel depletion MOSFET. The switching device $Q$ is configured to control a flow of current in the direction from the second connection node 42 to the third connection node 43.

The basic structure of the enhanced LC snubber 40 in Figure 4a is similar to that of a conventional LC snubber. The enhanced LC snubber circuit 40 comprises a first snubber diode $D_{sn1}$ connected between a fourth connection node 44 and the first connection node 41, and a snubber capacitor $C_{sn}$ connected between the second connection point 42 and the fourth connection point 44.

In the snubber 40, energy stored in the snubber is transferred to the output through a snubber transformer $T_{sn}$ coupled to the output of the switching converter in order to minimise circulating currents in the snubber 40. The disclosed snubber topology comprises a second snubber diode $D_{sn2}$ and a snubber transformer $T_{sn}$ having a primary winding and a secondary winding. The primary winding and second snubber diode $D_{sn2}$ are connected in series between the third connection node 43 and the fourth connection node 44.

On a path between the second connection node 42 and the fourth connection node 44 and through the third connection node 43, the second snubber diode $D_{sn2}$ is forward-biased in the direction in which the switching device $Q$ is configured to control the flow of current.

The first snubber diode $D_{sn1}$ is forward-biased in the same direction as the second snubber diode $D_{sn2}$ on a path between the first connection node 41 and the third connection node 43 through the fourth connection node 44.

In order to transfer the energy stored in the snubber capacitor $C_{sn}$ to the output, the snubber circuit 40 further comprises rectifying means 45 connecting the secondary winding of the snubber transformer $T_{sn}$ to an output of the switching converter. In Figure 4a, the rectifying means are connected between two output connection nodes 46 and 47 at the poles of the output capacitor. The rectifying means may comprise filtering means for filtering the rectified current. Figures 4b to 4e illustrate exemplary implementations of rectifying means suitable for the disclosed enhanced LC snubber. Figure 4b shows a single diode rectifier; Figure 4c shows a single diode rectifier with an opposite dot for a flyback converter operation; Figure 4d shows a voltage-doubler type rectifier; Figure 4e shows rectifying means with an inductive filter for forward converter operation. Further, a center-tap type or a full-bridge type rectifier may be used, for example.

The snubber 40 in Figure 4a can be considered as a small isolated DC-DC converter which transfers power from $C_{sn}$ to the output, sharing the switch with the main converter. This additional power transfer process allows circulating current, which typically causes large conduction losses in the snubber circuit, to be minimised.

Use of the disclosed snubber topology is not limited to the flyback converter shown in Figure 4a. Other switching converter topologies and/or other types of inductances and/or switching devices may be used. The switching device may be a MOSFET or an IGBT, for example. The switching converter may also be supplied by a negative supply voltage.

Figure 5 shows an exemplary implementation of the disclosed enhanced LC snubber topology in a flyback converter. The LC snubber 50 in Figure 5 can limit the additional voltage stress while maintaining the circulating currents at a reduced level.

In Figure 5, the rectifying means for coupling the secondary winding of the snubber transformer $T_{sn}$ are formed by a secondary output diode $D_{o2}$, which connects the snubber transformer $T_{sn}$ secondary winding to the output of the switching converter.

The snubber 50 in Figure 5 utilises the resonance between the leakage inductance $L_{sn,lkg}$ of the snubber transformer $T_{sn}$ and the snubber capacitor $C_{sn}$. The leakage inductance $L_{sn,lkg}$ of the snubber transformer $T_{sn}$ primary winding, the second snubber diode $D_{sn2}$, the snubber capacitor $C_{sn}$ and the first switching device $Q$ form a resonance circuit.

Since $L_{sn,lkg}$ is small compared with a snubber inductance of a conventional LC snubber, the snubber capacitor $C_{sn}$ may have to be larger in order to maintain the resonant frequency and to reduce the peak current of the snubber. As a result, the snubber capacitor voltage $V_{Csn}$ maintains almost a constant value, which also helps reducing the switch voltage stress.

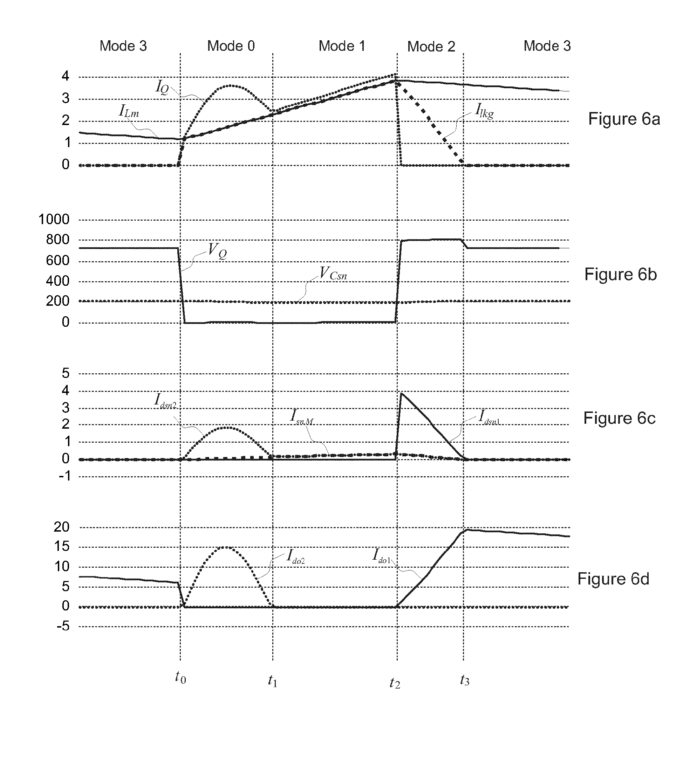

Figures 6a to 6d show exemplary voltage and current waveforms of the snubber of Figure 5. Four modes of operation are shown in Figures 6a to 6d. The magnetising current $I_{Lm}$ and the leakage current $I_{lkg}$ of the transformer $T$, and a current $I_Q$ through the switching device $Q$ are shown in Figure 6a; the voltage $V_Q$ over the switching device $Q$ and the voltage $V_{Csn}$ over the snubber capacitor $C_{sn}$ are shown in Figure 6b; the currents $I_{Dsn1}$ and $I_{DSn2}$ through the snubber diodes $D_{sn1}$ and $D_{Sn2}$ are shown in Figure 6c; currents $I_{Do1}$ and $I_{Do2}$ through the output diodes $D_{O1}$ and $D_{O2}$ are shown in Figure 6d;

Figures 7a to 7d show snubber current paths in the LC snubber during each of the modes. For the circuit analysis, the main transformer is represented by an equivalent circuit comprising an ideal transformer, a magnetising inductance $L_m$, and a leakage inductance $L_{lkg}$ in Figures 7a to 7d. The snubber transformer is represented with a snubber magnetising inductance $L_{sn,M}$, and a snubber leakage inductance $L_{sn,lkg}$. The switching converter is supplied with a supply voltage $V_S$ of 600 V. The voltage over the snubber capacitor $C_{sn}$ is represented by the reference $V_{Csn}$.

At instant $t_0$ in Figures 6a to 6d, the switch $Q$ is turned on and the magnetising current $I_{Lm}$ starts to flow through the switching device $Q$; Mode 0 starts. Figure 7a illustrates the path 71 of magnetising current $I_{Lm}$. At the same time, the snubber capacitor $C_{sn}$ and the snubber leakage inductance $L_{sn,lkg}$ form a resonant circuit 72, and an energy transfer path 73 from $C_{sn}$ to the output is formed through the snubber transformer. Thus, the energy stored in $C_{sn}$ is transferred to the output. In Mode 0, the current of the resonant circuit can be defined as a current $I_{Lsn,lkg}$ through the snubber capacitor leakage inductance:

$$I_{Lsn,lkg}(t) = \left(V_{Csn,\max} - n_{sn}V_O\right)\sqrt{\frac{C_{sn}}{L_{sn,lkg}}}\sin\left(\omega_3\left(t - t_0\right)\right), \qquad (8)$$

where $V_{Csn,max}$ is the maximum value of the snubber capacitor voltage; $V_O$ is the output voltage; $n_{sn}$ is the turns ratio of the snubber transformer; $\omega_3$ is the resonance frequency of the resonance circuit which can be defined as follows:

$$\omega_3 = \frac{1}{\sqrt{L_{sn,lkg}C_{sn}}} \; .$$

As shown in Figures 6a and 6c, the resonant operation ends at instant $t_1$. The enhanced LC snubber enters Mode 1. Figure 6c shows that a relatively small magnetising current $I_{LSn,M}$ of the snubber transformer still flows. Figure 7b shows path 72 of the snubber transformer magnetising current $I_{Lsn,M}$. The magnetising current $I_{Lm}$ of the main transformer still flows on path 71.

At instant $t_2$, the switching device $Q$ is turned off. The snubber circuit enters Mode 2. Figure 6b shows a sharp rise in the voltage $V_Q$ of the switching device $Q$. The first snubber diode $D_{sn1}$ is conducting and the voltage $V_Q$ is clamped to $V_S + V_{Csn}$. The output diode $D_{O1}$ is also conducting and an energy transfer path 74 to the output through the main transformer is formed. The magnetising current $I_{Lm}$ of the main transformer starts to flow on path 75.

The leakage inductance current $I_{lkg}$ flows to the snubber capacitor $C_{sn}$, i.e. the energy stored in the leakage inductance $L_{lkg}$ is transferred to $C_{sn}$. Figure 7c shows path 76 of the leakage current $L_{lkg}$. The leakage inductance current $I_{lkg}$ can be defined as follows:

$$I_{lkg}(t) = I_{Q,\text{peak}} - \frac{V_{Csn,\text{avg}} - nV_O}{L_{lkg}}\left(t - t_2\right), \qquad (9)$$

where $V_{Csn,avg}$ is the average voltage of the snubber capacitor $C_{sn}$. The magnetising current $I_{Lsn,M}$ of the snubber transformer flows back to the input side on a path 77 through the snubber diodes $D_{sn1}$ and $D_{sn2}$, which guarantees that the snubber transformer resets.

At instant $t_3$, the current $I_{lkg}$ through the leakage inductance of the main transformer reaches zero, as also shown in Figure 6a. The snubber circuit enters Mode 3. The switch remains in a stable non-conducting state. The output diode $D_{O1}$ is conducting, and the magnetising current $I_{Lm}$ of the main transformer flows to the output via paths 74 and 75.

Then, the switching device $Q$ is turned on again and the whole cycle is repeated starting from Mode 0.

The voltage/current stresses in the enhanced LC snubber circuit can be obtained according to following Equations 10 to 14. The effect of the magnetising inductance $L_{sn,M}$ of the snubber transformer $T_{sn}$ has been ignored. As the

turns ratio $n_{sn}$ of the snubber transformer $T_{sn}$ decreases, the additional voltage stress $\Delta V_Q$ decreases but the snubber currents increase. That is, a larger portion of the total power is transferred to the output through the snubber. In order to minimise the total conduction losses while guaranteeing the switch voltage stress margin, the turns ratio $n_{sn}$ of the snubber transformer may have to be carefully selected.

$$V_{Csn,\text{avg}} = n_{sn} V_O , \tag{10}$$

$$\Delta V_Q = \left( n_{sn} - n \right) V_O , \tag{11}$$

$$\Delta V_{Csn} = \frac{I_{Q,\text{peak}}^{2} L_{lkg}}{2 \left( 1 - n/n_{sn} \right) V_O C_{sn}} , \tag{12}$$

$$I_{Dsn1,\text{avg}} = I_{Dsn2,\text{avg}} = I_{Lsn,\text{avg}} = \frac{I_{Q,\text{peak}}^{2} L_{lkg}}{2 \left( n_{sn} - n \right) V_O T_S} , \text{ and} \tag{13}$$

$$I_{Do1,\text{avg}} = \frac{I_{Q,\text{peak}}^{2} L_{lkg}}{2 \left( 1 - n/n_{sn} \right) V_O T_S} , \tag{14}$$

where $T_S$ is the length of the switching cycle (= $1/F_S$).

The performance of the disclosed enhanced snubber was verified by computer simulations. The flyback converter with the enhanced LC snubber circuit as shown in Figure 5 was simulated, and the simulation was compared with a simulation of the conventional LC snubber of Figure 1 a.

The simulated flyback converter was designed according to an APS specification, the supply voltage being in the range of 300 to 1200 V. Additional voltage stress on the switch was relatively small since only a few suitable switching devices were available, such as a 1500-V Si MOSFET or a 1700-V SiC JFET/MOSFET. Thus, the snubbers limiting the additional voltage stress were heavily burdened, which made the design of the snubbers even more important in terms of efficiency.

The design parameters for the simulations were selected for a 1700-V switch. In both simulations, the supply voltage $V_S$ of the flyback converter was 1000 V; the output voltage $V_O$ was 24 V; the output power $P_O$ was 260 W; the switching frequency $F_S$ was 60 kHz. The turns ratio $N_P : N_S$ of the main transformer used in the simulations was 16:3; the magnetising inductance $L_M$ of the main transformer was 700 $\mu$H; the leakage inductance $L_{lkg}$ was 20 $\mu$H.

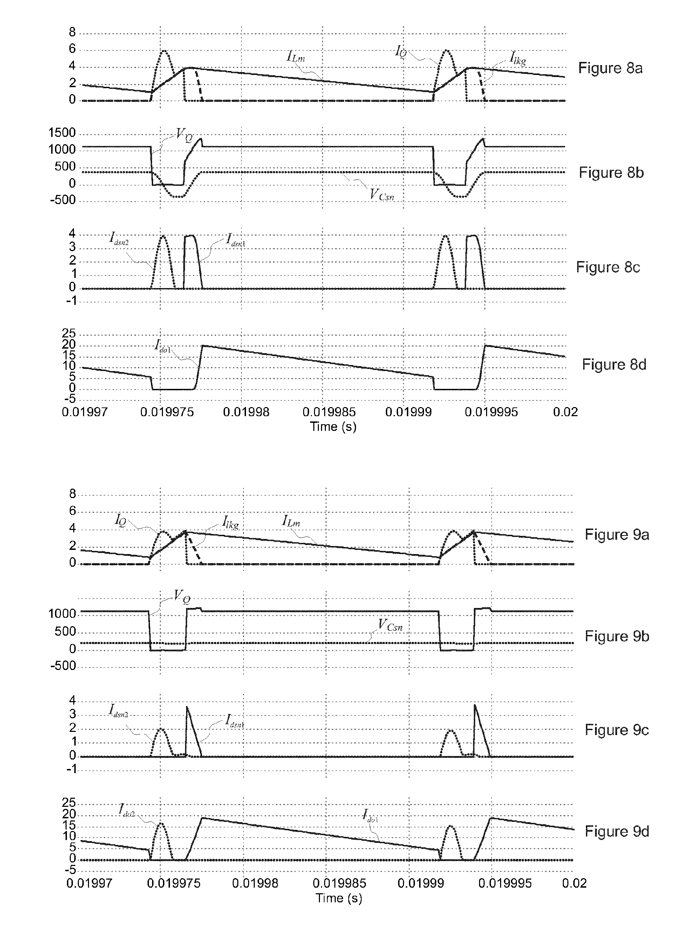

In the simulations of the conventional LC snubber, the snubber inductor $L_{sn}$ had an inductance of 40 $\mu$H; the snubber capacitor $C_{sn}$ had a capacitance of 5 nF. Figures 8a to 8d show simulated current and voltage waveforms of the conventional LC snubber.

In the simulations of the enhanced LC snubber, the snubber transformer primary winding had a leakage inductance $L_{sn,lkg}$ of 2 $\mu$H; the snubber capacitor $C_{sn}$ had a capacitance of 100 nF. The turns ratio $N_{P,sn} : N_{S,sn}$ of the snubber transformer used in the simulations was 25:3. Figures 9a to 9d show simulated current and voltage waveforms of the enhanced LC snubber.

Figures 8a and 9a show the magnetising current $I_{Lm}$, the leakage current $I_{lkg}$, and the current $I_Q$ of the switching device $Q$; Figures 8b and 9b show the voltage $V_Q$ over the switching device $Q$ and the snubber capacitor voltage $V_{Csn}$; Figures 8c and 9c show the snubber diode currents $I_{Dsn1}$ and $I_{Dsn2}$; Figures 8d and 9d show the first output diode current $I_{Do1}$, and in Figure 9d, the second output diode current $I_{Do2}$. Comparison of the simulated current/voltage stresses is given in Table 1.

Table 1. Comparison of simulated current/voltage stresses

| | Conventional LC snubber | Enhanced LC snubber |
|---|---|---|
| $I_{lkg,avg}$ | 0.486 A | 0.388 A |

(continued)

|  | Conventional LC snubber | Enhanced LC snubber |
|---|---|---|
| $I_{lkg,rms}$ | 1.224 A | 1 A |
| $I_{Q,avg}$ | 0.484 A | 0.386 A |
| $I_{Q,rms}$ | 1.49 A | 1.133 A |
| $I_{Dsn1,avg}$ | 0.206 A | 0.112 A |
| $I_{Dsn1,rms}$ | 0.861 A | 0.546 A |
| $I_{Dsn2,avg}$ | 0.204 A | 0.11 A |
| $I_{Dsn2,rms}$ | 0.796 A | 0.4 A |
| $I_{Do1,avg}$ | 10.9 A | 10.11 A |
| $I_{Do1,rms}$ | 12.5 A | 11.5 A |
| $I_{Do2,avg}$ | - | 0.79 A |
| $I_{Do2,rms}$ | - | 3.18 A |
| $I_{Co,rms}$ | 6.11 A | 4.93 A |
| $V_{Q,peak}$ | 1370 V | 1214 V |
| $V_{Csn,peak}$ | 370 V | 214 V |

As shown in Table 1, the simulated snubber currents $I_{Dsn1}$ and $I_{Dsn2}$ were reduced by about a half in the simulated enhanced LC snubber, which led to reduced $I_{lkg}$ and $I_Q$. Therefore, smaller conduction losses could be achieved with the enhanced LC snubber. The peak switch voltage stress was also reduced from 1370 V down to 1214 V. Such reduction may improve the reliability of the flyback converter. In addition, the smaller voltage stress provides design flexibility to further increase the duty ratio, which may be used to further reduce the conduction losses.

The simulated enhanced snubber transferred a portion of the power through $D_{o2}$ during the on-state of the switch $Q$. Thus, the ripple current of the output capacitors was reduced. A smaller ripple allows use of a smaller output capacitor.

It is obvious to a person skilled in the art that the inventive concept can be implemented in various ways. The invention and its embodiments are not limited to the examples described above but may vary within the scope of the claims.

REFERENCES

[1] H.-S. Choi, "AN4137 - Design guidelines for off-line flyback converters using Fairchild Power Switch (FPS)", Fairchild Semiconductor Cor., 2003.

[2] S. Buonomo, F. Saya, and G. Vitale, "AN1889 - STC03DE170 in 3-phase auxiliary power supply," STMicroelectronics, 2003.

[3] US5260607 (A) 1993-11-09, K. Yoshihide, Snubber circuit for power converter.

[4] US5633579 (A) 1997-05-27, M. G. Kim, Boost converter using an energy reproducing snubber circuit.

[5] T. Ninomiya, T. Tanaka, and K. Harada, "Analysis and optimization of a nondissipative LC turn-off snubber," IEEE Trans. Power Electronics, vol. 3, no. 2, Apr. 1988.

[6] US6115271 (A) 2009-09-05, C. H. S. Mo, Switching power converters with improved lossless snubber networks.

[7] C.-S. Liao and K. M. Smedley, "Design of high efficiency flyback converter with energy regenerative snubber," in Proc. IEEE APEC 2008, pp. 797-800.

[8] K. I. Hwu, Y. T. Yau, and L.-L. Lee, "Powering LED using high-efficiency SR flyback converter," IEEE Trans. Industry Applications, vol. 47, no. 1, Jan/Feb. 2011.

[9] TW201119201 (A) 2011-06-01, R. L. Lin and Y. H. Huang, Forward-flyback converter with lossless snubber circuit.

**Claims**

1. An LC snubber circuit for a switching converter, the switching converter comprising
a first converter inductor connected between a first connection node (41) and a second connection node (42), and
a first converter switching device connected between the second connection node (42) and a third connection node (43),
wherein the LC snubber circuit comprises:
a first snubber diode connected between a fourth connection node (44) and the first connection node (41),
a snubber capacitor connected between the second connection point (42) and the fourth connection point (44),
a second snubber diode and a snubber transformer having a primary winding and a secondary winding, wherein the primary winding and second snubber diode are connected in series between the third connection node (43) and the fourth connection node (44), and
rectifying means connecting the secondary winding of the snubber transformer to an output of the switching converter.

2. An LC snubber circuit as claimed in claim 1, wherein the rectifying means are formed by a diode connecting the snubber transformer secondary winding to the output of the switching converter.

3. A switching converter comprising the LC snubber circuit as claimed in any one of previous claims.

4. A switching converter as claimed in claim 3, wherein the switching converter is an isolated switching converter and the first converter inductance is a primary winding of a main transformer of the switching converter.

5. A switching converter as claimed in claim 4, wherein the isolated switching converter is a flyback converter.

6. A method for a switching converter, the switching converter comprising
a first converter inductor connected between a first connection node (41) and a second connection node (42), and
a first converter switching device connected between the second connection node (42) and a third connection node (43),
wherein the method comprises:
using an LC snubber for limiting the maximum voltage stress of the first converter switching device,
transferring energy stored in the LC snubber to the output through a snubber transformer coupled with the output in order to minimise the circulating currents in the LC snubber.

7. A method as claimed in claim 6, wherein the method comprises using an LC snubber as claimed in claim 1 or 2.

$N_P: N_S = n{:}1$

Figure 1a

Figure 1b

Figure 1c

Figure 2a

Figure 2b

Figure 2c

(Mode 0)

Figure 3a

(Mode 1)

Figure 3b

(Mode 2)

Figure 3c

(Mode 3)

Figure 3d

(Mode 4)

Figure 3e

Figure 4a

Figure 4b     Figure 4c     Figure 4d     Figure 4e

Figure 5

Figure 6a

Figure 6b

Figure 6c

Figure 6d

(Mode 0)

Figure 7a

(Mode 1)

Figure 7b

(Mode 2)

Figure 7c

(Mode 3)

Figure 7d

Figure 8a

Figure 8b

Figure 8c

Figure 8d

Figure 9a

Figure 9b

Figure 9c

Figure 9d

Europäisches
Patentamt

European
Patent Office

Office européen
des brevets

# EUROPEAN SEARCH REPORT

Application Number

EP 13 17 1354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 40 01 325 A1 (PHILIPS PATENTVERWALTUNG [DE] PHILIPS INTELLECTUAL PROPERTY [DE]) 25 July 1991 (1991-07-25) * figures 1-2 * * column 3, line 67 - column 4, line 2 * * column 4, line 27 - line 36 * ----- | 1-7 | INV. H02M1/34 H02M3/335 |
| X | WO 02/41482 A2 (KONINKL PHILIPS ELECTRONICS NV [NL]) 23 May 2002 (2002-05-23) * figure 6 * * page 7, line 20 - line 26 * * page 8, line 6 - line 10 * ----- | 1-7 | |
| X | US 2006/274558 A1 (KEUNG LEE T [HK] KEUNG LEE TAI [HK]) 7 December 2006 (2006-12-07) * figure 8 * * paragraph [0033] * ----- | 1-7 | |
| A | US 2011/103102 A1 (CHIANG SZU-MING [TW] ET AL) 5 May 2011 (2011-05-05) * figure 7 * ----- | 1-7 | TECHNICAL FIELDS SEARCHED (IPC) H02M |

The present search report has been drawn up for all claims

| Place of search | Date of completion of the search | Examiner |
|---|---|---|
| The Hague | 23 October 2013 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Patent document cited in search report | | Publication date | Patent family member(s) | | Publication date |
|---|---|---|---|---|---|
| DE 4001325 | A1 | 25-07-1991 | NONE | | |
| WO 0241482 | A2 | 23-05-2002 | CN | 1418398 A | 14-05-2003 |
| | | | EP | 1336239 A2 | 20-08-2003 |
| | | | JP | 2004514398 A | 13-05-2004 |
| | | | US | 6473318 B1 | 29-10-2002 |
| | | | WO | 0241482 A2 | 23-05-2002 |
| US 2006274558 | A1 | 07-12-2006 | NONE | | |
| US 2011103102 | A1 | 05-05-2011 | TW | 201117539 A | 16-05-2011 |
| | | | US | 2011103102 A1 | 05-05-2011 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5260607 A
- US 5633579 A, M. G. Kim
- US 6115271 A, C. H. S. Mo
- TW 201119201 A, R. L. Lin and Y. H. Huang

**Non-patent literature cited in the description**

- **H.-S. CHOI.** AN4137 - Design guidelines for off-line flyback converters using Fairchild Power Switch (FPS. *Fairchild Semiconductor Cor.,* 2003
- **S. BUONOMO ; F. SAYA ; G. VITALE.** AN1889 - STC03DE170 in 3-phase auxiliary power supply. *STMicroelectronics,* 2003
- **T. NINOMIYA ; T. TANAKA ; K. HARADA.** Analysis and optimization of a nondissipative LC turn-off snubber. *IEEE Trans. Power Electronics,* April 1988, vol. 3 (2
- **C.-S. LIAO ; K. M. SMEDLEY.** Design of high efficiency flyback converter with energy regenerative snubber. *Proc. IEEE APEC,* 2008, 797-800
- **K. I. HWU ; Y. T. YAU ; L.-L. LEE.** Powering LED using high-efficiency SR flyback converter. *IEEE Trans. Industry Applications,* January 2011, vol. 47 (1